# FASCICULE DE BREVET EUROPEEN

(11) **EP 1 262 350 B1**
(45) Date de publication et mention de la délivrance du brevet: **21.04.2010**
(21) Numéro de dépôt: 02364026.1
(22) Date de dépôt: 22.05.2002
(51) Int. Cl.: B60J 1/20

(54) **Store à moyens de solidarisation temporaire des paliers**
Rollo mit zeitweiligem Verriegelungsmittel für die Lager
Roller blind with means for temporarily retaining the bearings

(30) Priorité: 28.05.2001 FR 0107128
(43) Date de publication de la demande: 04.12.2002
(73) Titulaire: Advanced Comfort Systems France - ACS France, 79300 Bressuire (FR)
(72) Inventeur: Maltaverne, Guy, 79300 Bressuire (FR)
(74) Mandataire: Bioret, Ludovic

(56) Documents cités:
- DE-A- 19 640 846
- DE-U- 20 015 145
- FR-A- 2 752 874
- GB-A- 2 148 366
- US-A- 6 079 474
- US-B1- 6 213 186

## Description

Le domaine de l'invention est celui des stores à enrouleur, notamment pour les véhicules automobiles. Plus précisément, l'invention concerne la conservation de tels stores à enrouleur dans une position prédéterminée, avant leur montage définitif et/ou leur première utilisation.

De façon classique, les stores à enrouleur comprennent un tube enrouleur, sur lequel est montée une toile d'occultation mobile entre deux positions : une position d'occultation, dans laquelle la toile est déployée, par exemple en regard d'une vitre latérale ou d'une vitre arrière d'un véhicule, et une position repliée, dans laquelle au moins la plus grande partie de la toile est enroulée autour du tube enrouleur.

Les extrémités du tube enrouleur reçoivent chacune un palier, permettant la rotation du tube. Ils présentent par exemple une portion pénétrant à l'intérieur du tube, dont le diamètre extérieur est adapté au diamètre intérieur du tube, pour permettre une rotation efficace de ce dernier, et une portion externe, destinée à être montée de façon fixe dans un boîtier.

De plus en plus souvent cependant, on supprime le boîtier, tant pour des raisons de coût de revient que pour des raisons d'encombrement. Les paliers peuvent ainsi être directement montés dans des emplacements prévus à cet effet, par exemple dans une portière ou sous une lunette arrière d'un véhicule.

Des moyens de rappel, par exemple un ressort spiral, sont prévus pour entraîner la toile dans la position repliée. Le déploiement de la toile, qui peut être manuel, en agissant sur une barre de tirage, ou motorisé, assure le bandage de ces moyens de rappel. Le repliement se fait automatiquement, sous l'effet de ces moyens de rappel.

Pour obtenir ce résultat, une extrémité des moyens de rappel est solidarisée à l'un des paliers, dit premier palier, par exemple à un prolongement de la portion interne. L'autre extrémité des moyens de rappel est solidaire du tube enrouleur, par exemple via des moyens de fixation montés à l'intérieur du tube.

Pour que le repliement soit efficace et complet, il est nécessaire que les moyens de rappel soient prébandés, lorsque le store est en position repliée. Sinon, le repliement risque de ne pas être total. En d'autres termes, on ne peut pas se contenter, lors de la fabrication du store, de mettre en place le ressort dans sa position de repos, dans le tube équipé de la toile repliée.

Il faut donc imprimer aux moyens de rappel une prétension, et la conserver jusqu'au montage définitif dans le véhicule. Dans le cas d'un ressort spiral, par exemple, cela revient à faire effectuer quelques tours de prébandage au tube, le premier palier étant maintenu immobile (ou vice-versa).

Lorsque l'ensemble est prévu pour être aussitôt monté dans un boîtier, il n'y a pas de difficulté pour conserver ce prébandage. Cela n'est en revanche pas le cas lorsque les stores sont fabriqués et livrés sans boîtier, notamment pour être montés directement dans des véhicules. On conçoit que, sous l'effet du prébandage, le premier palier (respectivement le tube) tournera, par rapport au tube (respectivement le premier palier), jusqu'à ce que les moyens de rappel reviennent sensiblement à leur position de repos. Le prébandage n'aura donc servi à rien, et le repliement risque ensuite d'être inefficace.

On connaît une technique décrite dans le document FR- 2 752 874, mettant en oeuvre un ergot d'indexation cassable, qui maintient le prébandage tant qu'il n'a pas été cassé. Un inconvénient de cette technique est sa complexité de construction, ainsi que le fait qu'elle est à usage unique; ainsi, dans ledit document, un autre mode de réalisation comportant des moyens de solidarisation temporaires amovibles est également prévu (correspondant au préambule de la revendication indépendante 1).

L'invention a notamment pour objectif de pallier ces inconvénients de l'état de l'art.

Plus précisément, un objectif de l'invention est de fournir un store à enrouleur sans boîtier, conservant un prébandage efficace, et offrant ainsi une bonne qualité de repliement de la toile.

Un autre objectif de invention est de fournir un tel store à enrouleur, qui soit aisé à monter et à mettre en oeuvre, tant par les constructeurs, dans les véhicules neufs, que par tout un chacun, par exemple en tant que pièce de remplacement ou équipement optionnel.

L'invention a également pour objectif de fournir un tel store à enrouleur, qui soit simple à fabriquer, à stocker et à livrer, et notamment qui soit d'un coût de revient réduit, par rapport aux stores classiques.

Ces objectifs, ainsi que d'autres qui apparaîtront par la suite, sont atteints à l'aide d'un store à enrouleur selon la revendication 1, et d'un cavalier formant moyen de solidarisation temporaire amovible pour ledit store, selon la revendication 2.

Ladite position prédéterminée peut notamment être une position avant montage dudit store, dans laquelle ladite toile est en position repliée et lesdits moyens de rappel ont été prébandés.

Ainsi, il n'est pas nécessaire de prévoir un boîtier pour maintenir le store dans sa position prébandée. Le store reste dans cette position, jusqu'à son montage ou sa première utilisation. On obtient ainsi un store peu coûteux à réaliser, aisé à monté et à mettre en oeuvre, et fournissant un prébandage efficace.

D'autres caractéristiques et avantages de l'invention apparaîtront plus clairement à la lecture de la description suivante un mode de réalisation de l'invention, donné à titre de simple exemple illustratif et non limitatif, et du dessin annexé, à savoir :

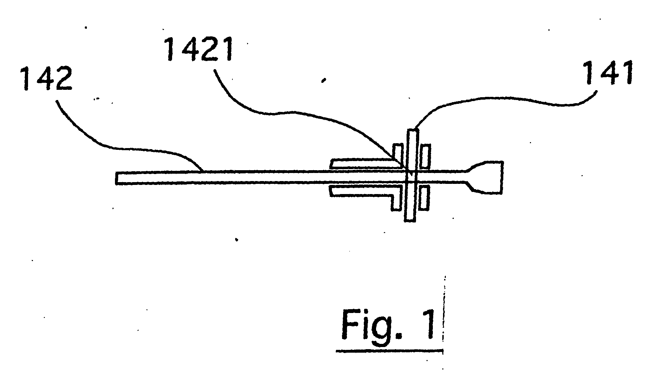

- la figure 1 illustre un mode de réalisation de l'invention selon lequel la rotation est empêchée par un cavalier chevauchant une tige présentant un méplat.

L'invention propose donc une alternative efficace aux stores enrouleurs prébandés devant être montés dans un boîtier : prévoir des moyens de solidarisation temporaire des deux paliers, une fois le prébandage effectué. Ainsi, les deux paliers sont maintenus immobiles l'un par rapport à l'autre, ce qui signifie que le tube enrouleur, et donc les moyens de rappel (classiquement un ressort logé à l'intérieur du tube), restent dans une position fixe, jusqu'à ce que le store soit monté dans un véhicule. Les tours de garde imprimés au ressort sont ainsi conservés. Les moyens de solidarisation temporaire sont ôtés une fois que le store est monté, ou lors de la première utilisation de ce dernier.

La figure 1 illustre un mode de mise en oeuvre de ce principe, selon l'invention. D'une façon générale, le store comprend un tube enrouleur, sur lequel est montée une toile. Le tube reçoit à ses extrémités deux paliers. Un ressort est monté à l'intérieur du tube. Un premier palier est solidaire d'une extrémité du ressort. L'autre extrémité du ressort est solidaire du tube (par exemple par l'intermédiaire d'un bouchon).

Selon l'invention, la solidarisation temporaire agit entre d'une part le premier palier (solidaire du ressort de rappel), et le tube, d'autre part.

La rotation est empêchée par un cavalier 141 chevauchant une tige 142 solidaire du tube et présentant un méplat 1421. Il suffit de retirer le cavalier pour libérer le tube. Le méplat peut également être défini directement sur le tube, le cavalier étant alors adapté pour coopérer avec celui-ci.

## Revendications

1. Store à enrouleur, notamment pour véhicule automobile, comprenant un tube enrouleur équipé d'un palier à chacune de ces extrémités et auquel est solidarisée une extrémité d'une toile d'occultation mobile entre une position déployée et une position repliée, dans laquelle elle est essentiellement enroulée autour dudit tube enrouleur,
des moyens de rappel solidarisés par une première extrémité à un premier desdits paliers et par une seconde extrémité audit tube enrouleur tendant à ramener ladite toile d'occultation dans ladite position repliée, ledit store coopérant
avec des moyens de solidarisation temporaires amovibles, mis en place pour maintenir ledit store dans une position avant montage de ce dernier, dans laquelle ladite toile est en position repliée et lesdits moyens de rappel ont été prébandés, **caractérisé en ce que**
lesdits moyens de solidarisation forment un cavalier (141) solidarisant ledit premier palier et ledit tube enrouleur,
et **en ce que** ledit tube enrouleur ou une tige solidaire dudit tube enrouleur présente au moins un méplat prévu pour coopérer avec ledit cavalier de façon à empêcher la rotation dudit tube.

2. Cavalier formant des moyens de solidarisation temporaires amovibles pour un store à enrouleur selon la revendication 1,
ledit store comprenant un tube enrouleur équipé d'un palier à chacune de ces extrémités et auquel est solidarisée une extrémité d'une toile d'occultation mobile entre une position déployée et une position repliée, dans laquelle elle est essentiellement enroulée autour dudit tube enrouleur,
des moyens de rappel solidarisés par une première extrémité à un premier desdits paliers et par une seconde extrémité audit tube enrouleur tendant à ramener ladite toile d'occultation dans ladite position repliée,
**caractérisé en ce que** ledit cavalier est prévu pour maintenir ledit store dans une position avant montage de ce dernier, dans laquelle ladite toile est en position repliée et lesdits moyens de rappel ont été prébandés, en solidarisant ledit premier palier et ledit tube enrouleur
et **en ce que** ledit cavalier est adapté pour coopérer avec au moins un méplat prévu sur ledit tube enrouleur ou une tige solidaire dudit tube enrouleur de façon à empêcher la rotation dudit tube.

## Claims

1. Roller blind, especially for a motor vehicle, comprising a roller tube which is equipped with a bearing at each of its ends and with which there is interlocked one end of a screening cloth which is movable between a deployed position and a wound-up position in which it is essentially rolled up around the said roller tube, and
return means which are interlocked, by a first end, with a first of the said bearings and, by a second end, with the said roller tube and which tend to bring the said screening cloth back into the said wound-up position,
the said blind cooperating with removable temporary interlocking means which are placed in position in order to keep the said blind in a position, prior to the mounting of the latter, in which the said cloth is in the wound-up position and the said return means have been pre-loaded,
**characterised in that** the said interlocking means form a rider (141) which interlocks the said first bearing and the said roller tube,
and **in that** the said roller tube, or a rod which is integral with the said roller tube, has at least one flat which is designed to cooperate with the said rider so as to prevent the rotation of the said tube.

2. Rider forming removable temporary interlocking means for a roller blind according to claim 1,
the said blind comprising a roller tube which is equipped with a bearing at each of its ends and with which there is interlocked one end of a screening cloth which is movable between a deployed position and a wound-up position in which it is essentially rolled up around the said roller tube, and
return means which are interlocked, by a first end, with a first of the said bearings and, by a second end, with the said roller tube and which tend to bring the said screening cloth back into the said wound-up position,
**characterised in that** the said rider is designed to keep the said blind in a position, prior to the mounting of the latter, in which the said cloth is in the wound-up position and the said return means have been pre-loaded, by interlocking the said first bearing and the said roller tube,
and **in that** the said rider is adapted to cooperate with at least one flat which is provided on the said roller tube, or a rod which is integral with the said roller tube, so as to prevent the rotation of the said tube.

## Patentansprüche

1. Fensterrollo, insbesondere für ein Kraftfahrzeug, umfassend ein Wickelrohr, welches an jedem seiner Enden mit einem Lager versehen ist, und welches mit einem Ende einer Abdeckbahn verbunden ist, wobei die Abdeckbahn zwischen einer ausgefahrenen und einer eingefahrenen Position beweglich ist, wobei die Abdeckbahn in der eingefahrenen Position im Wesentlichen um das Wickelrohr gewickelt ist,
und Rückführmittel, die über ein erstes Ende mit einem ersten der Lager sowie über ein zweites Ende mit dem Wickelrohr verbunden sind, wobei das Wickelrohr versucht, die Abdeckbahn in die eingefahrene Position zurückzuführen, wobei das Rollo mit zeitweiligen, lösbaren Verbindungsmitteln zusammenwirkt, welche vor Montage des Rollos zum Halten des Rollos in einer Position vorgesehen sind, in welcher die Bahn in eingefahrener Position ist und die Rückführmittel vorgespannt wurden,
**dadurch gekennzeichnet, dass** die Verbindungsmittel einen das erste Lager und das Wickelrohr verbindenden Reiter (141) bilden,
und dass das Wickelrohr oder eine mit dem Wickelrohr verbundene Stange zumindest eine Abflachung aufweist, welche dazu vorgesehen ist, mit dem Reiter derart zusammenzuwirken, dass die Drehung des Rohrs verhindert wird.

2. Reiter, welcher zeitweilige, lösbare Verbindungsmittel für ein Fensterrollo nach Anspruch 1 ausbildet, wobei das Rollo ein Wickelrohr umfasst, welches an jedem seiner Enden mit einem Lager versehen ist, und welches mit einem Ende einer Abdeckbahn verbunden ist, wobei die Abdeckbahn zwischen einer ausgefahrenen und einer eingefahrenen Position beweglich ist, wobei die Abdeckbahn in der eingefahrenen Position im Wesentlichen um das Wickelrohr gewickelt ist, und wobei das Rollo Rückführmittel umfasst, die über ein erstes Ende mit einem ersten der Lager sowie über ein zweites Ende mit dem Wickelrohr verbunden sind, wobei das Wickelrohr versucht, die Rollo-bahn in die eingefahrene Position zurückzuführen,
**dadurch gekennzeichnet, dass** der Reiter vor Montage des Rollos zum Halten des Rollos in einer Position vorgesehen ist, in welcher die Bahn in eingefahrener Position ist und die Rückführmittel vorgespannt wurden, indem das erste Lager und das Wickelrohr verbunden sind,
und dass der Reiter dazu ausgebildet ist, mit zumindest einer auf dem Wickelrohr vorgesehenen Abflachung oder mit einer mit dem Wickelrohr verbundenen Stange derart zusammenzuwirken, dass die Drehung des Rohrs verhindert wird.
